Europäisches Patentamt

European Patent Office

Office européen des brevets

(11) Veröffentlichungsnummer: **0 265 746**
**A1**

(12) **EUROPÄISCHE PATENTANMELDUNG**

(21) Anmeldenummer: 87114803.7

(22) Anmeldetag: 09.10.87

(51) Int. Cl.4: **C08G 63/48** , **C08G 63/66** , **C09D 3/64**

(30) Priorität: 30.10.86 DE 3636929

(43) Veröffentlichungstag der Anmeldung: 04.05.88 Patentblatt 88/18

(84) Benannte Vertragsstaaten: ES

(71) Anmelder: BASF Lacke + Farben Aktiengesellschaft
Max-Winkelmann-Strasse 80
D-4400 Münster(DE)

(72) Erfinder: **Pronobis, Jörg**
Beethovenstrasse 90
D-5024 Pulheim(DE)
Erfinder: **Kadambande,Vijay**
Stolberger Strasse 4
D-5000 Köln 41(DE)
Erfinder: **Weber, Bodo**
Nobel-Strasse 16
D-5205 St. Augustin 3(DE)
Erfinder: **Peter-Pollmann, Rolf**
Wielandstrasse 87
D-4400 Münster(DE)

(54) **Lufttrocknende Alkydharzbindemittel,Verfahren zu ihrer Herstellung,Überzugsmittel auf der Basis der Alkydharzbindemittel sowie deren Verwendung als Bautenanstrichmittel.**

(57) Die vorliegende Erfindung betrifft lufttrocknende Alkydharzbindemittel, die erhältlich sind aus

a) 40 bis 80 Gew.-% trocknenden und/oder halbtrocknenden Fettsäuren,

b) 15 bis 35 Gew.-% Di-und/oder Polyolen, wobei mindestens 80 Gew.-% der Alkohole aus Di-Pentaerythrit und/oder Di-Trimethylolpropan bestehen,

c) 5 bis 30 Gew.-% Di-und/oder Polycarbonsäuren bzw. deren Anhydriden,

d) 0 bis 10 Gew.-% Diisocyanaten und

e) 0 bis 20 Gew.-% Monocarbonsäuren, wobei die Summe der Komponenten a), b), c), d) und e) 100 Gew.-% beträgt. Die Erfindung betrifft auch Verfahren zur Herstellung der Alkydharzbindemittel sowie Überzugsmittel auf der Basis der beschriebenen Alkydharze. Die Überzugsmittel haben einen Festkörpergehalt von mindestens 75 Gew.-% und eignen sich vorteilhafterweise als lufttocknende Bautenanstrichmittel.

## Lufttrocknende Alkydharzbinemittel, Verfahren zu ihrer Herstellung, Überzugsmittel auf der Basis der Alkydharzbindemittel sowie deren Verwendung als Bautenanstrichmittel

Die vorliegende Erfindung betrifft lufttrocknende Alkydharzbindemittel, hergestellt aus trocknenden und/oder halbtrocknenden Fettsäuren, Di-und/oder Polyolen, wobei ein Teil der Alkohole durch Di-Trimethylolpropan und/oder Di-Pentaerythrit ersetzt ist, und Di-und/oder Polycarbonsäuren.

Zum Stand der Technick gehörende Bautenanstrichmittel basieren auf lufttrocknenden Alkydharzen, die aus trocknenden und/oder halbtrocknenden, pflanzlichen oder tierischen Ölen bzw. Fettsäuren gebildet werden. Als Alkoholkomponente werden beispielsweise Pentaerythrit, Trimethylolpropan und Glycerin verwendet. Anteilig können auch Diole mitverwendet werden. Vorzugsweise werden als Säurekomponente aromatische Dicarbonsäuren eingesetzt. Mittels dieser Bindemittel werden Lacke mit Festkörpergehalten bis etwa 70 Gew.-% bei Applikationsviskosität erhalten. Als Lösungsmittel kommen vorwiegend Benzine mit einer Aliphatenfraktion von 140°C bis 200°C in Frage. Derartige bekannte Lacke weisen gute Verarbeitungs-und Trocknungseigenschaftten, eine gute Wetterbeständigkeit sowie gute Eigenschaften in bezug auf den Glanz auf. Nachteilig ist jedoch, daß diese Systeme einen Lösungsmittelanteil von mindestens 30 Gew.-% enthalten.

Um den Gehalt an organischen Lösungsmitteln zu reduzieren, wurden wäßrige Alkydharzsysteme entwickelt.

Lacke auf der Basis wasserlöslicher Alkydharze benötigen bis zu 20 Gew.-% flüchtige organische Lösungsmittel, um sich gut verarbeiten zu lassen.

Bei Einsatz wäßriger Dispersionen tritt der Nachteil auf, daß die entstehenden Überzüge nicht glänzend und nicht blockfest genug sind.

Es ist bekannt, durch Erniedrigung des Molekulargewichts der Bindemittel und durch Einsatz von Thixotropierungsmitteln sog. High-Solid-Lacke herzustellen. Bei auf diese Art und Weise hergestellten, festkörperreichen lufttrocknenden Alkydharzen tritt jedoch der Nachteil auf, daß diese Systeme sehr - schlecht trocknen.

Das Dimere von Trimethylolpropan, Di-Trimethylolpropan, ein Alkohol mit 4 primären Hydroxylgruppen, wird zur Verwendung in lufttrocknenden Alkydharzen und gesättigten Polyesterharzen empfohlen, wobei Di-Trimethylolpropan einen Teil des Polyolgehaltes ersetzen soll. Bei den zum Stand der Technik gehörenden Alkyldharzen, die Di-Trimethylolpropan einkondensiert enthalten, stellt dieser mehrwertige Alkohol jedoch nur bis etwa ein Drittel des gesamten Polyolgehaltes dar. Die Modifizierung mit Di-Trimethylolpropan führt ohne eine Beeinflussung des Härtegrades zu einer ehröhten Flexibilität der entstehenden Überzüge.

Die Festkörpergehalte der bekannten, mit Di-Trimethylolpropan modifizierten Alkydharze liegen bei Applikationsviskosität unter 70 Gew.-%.

Das Dimere von Pentaerythrit, Di-Pentaerythrit, ein Alkohol mit 6 primären Hydroxylgruppen, wird als Rohstoff für Alkydharze für Überzugsmittel und Druckfarben empfohlen.

Die Aufgabe der vorliegenden Erfindung bestand darin, Bindemittel zur Verfügung zu stellen, die sich zu lufttrocknenden Überzugsmitteln mit einem Festkörpergehalt von mindestens 70 Gew.-% bei Applikationsviskosität verarbeiten lassen. Die resultierenden Überzugsmittel sollen gute Trocknungseigenschaften bei genügend hohen Schichtdicken haben.

Diese Aufgabe wird überraschenderweise durch lufttrocknende Alkydharzbinemittel der eingangs genannten Art gelöst, die dadurch gekannzeichnet sind, daß die Alkydharze erhältlich sind aus

a) 40 bis 80 Gew.-% trocknenden und/oder halbtrocknenden Fettsäuren,

b) 15 bis 35 Gew.-% Di-und/oder Polyolen, wobei mindestens 80 Gew.-% der Alkohole aus Di-Pentaerythrit und/oder Di-Trimethylolpropan bestehen.

c) 5 bis 30 Gew.-% Di-und/oder Polycarbonsäuren bzw. deren Anhydriden.

d) 0 bis 10 Gew.-% Diisocyanaten und

e) 0 bis 20 Gew.-% Monocarbonsäuren, wobei die Summe der Komponenten a), b), c), d) und e) 100 Gew.-% beträgt.

Unter Di-Trimethylolpropan bzw. Di-Pentaerythrit sind die Dimere von Trimethylolpropan bzw. Pentaerythrit zu verstehen, die über zwei Hydroxylgruppen durch eine Ethergruppe miteinander verbunden sind.

Durch den Einsatz von Di-Pentaerythrit und/oder Di-Trimethylolpropan in dem o.a. Mengenverhältnis gelangt man überraschenderweise zu niedrigviskosen Bindemitteln, die eine sehr gute Löslichkeit in Testbenzin haben, obwohl die Alkydharze relativ hohe Molekulargewichte besitzen. Da die erfindungsgemäßen Bindemittel niedrigviskos sind, lassen sie sich zu Überzugsmitteln mit einem Festkörpergehalt von mindestens 70 Gew.-% bei Applikationsviskosität verarbeiten. Durch den Einbau von Di-Pentaerythrit und/oder Di-Trimethylolpropan in einem bestimmten Mengenverhältnis wird erreicht, daß ein relativ hoher Anteil an Fettsäuren eingebaut wird, was zu den beschriebenen guten Eigenschaften führt.

Es war überraschend, daß die Alkydharzbindemittel trotz der relativ hohen mittleren Molekulargewichte niedrigviskos sind. Die Viskositäten der 80%igen Lösungen der erfindungsgemäßen Bindemittel in Xylol liegen im Bereich von 2,0 bis 12,0 dPa•s. Bevorzugt weisen 80%ige Lösungen der Alkydharzbindemittel in Testbenzin Viskositäten im Bereich von 2,0 bis 10,0 dPa•s bie 20°C auf.

Die Alkydharze haben im allgemeinen Säurezahlen von etwa 2 bis 20 mg KOH/g und Hydroxylzahlen von etwa 2 bis 100 mg KOH/g.

Besonders bevorzugt ist es, wenn die Alkoholkomponente b) zu mehr als 95 Gew.-% aus Di-Pentaerythrit und/oder Di-Trimethylolpropan besteht. Vorteilhafterweise werden als Komponente a) 60 bis 80 Gew.-% trocknende und/oder halbtrocknende Fettsäuren verwendet.

Geeignet trocknende und/oder halbtrocknende Fettsäuren, die im allgemeinen 6 bis 24 Kohlenstoffatome pro Molekül aufweisen, sind Sojaölfettsäure, Saflorölfettsäure, Sonnenblumenölfettsäure, Baumwollsaatölfettsäure, Rizinusölfettsäure, Tallölfettsäure und Leinölfettsäure. Anteilig können selbstverständlich auch nichttrocknende Fettsäuren, wie z.B. Kokosnußölfettsäure, Isononansäure und Alpha-Ethylhexansäure mitverwendet werden.

Als Komponente b) kommen neben Di-Pentaerythrit und Di-Trimethylolpropan Trimethylolpropan, Glycerin, Ethylenglykol, Neopentylglykol, Propylenglykol, 1,6-Hexandiol, Trimethylolethan, 1,4-Dimethylolcyclohexan, 1,3-Dimethylolcyclohexan, 1,2-Cyclohexandiol sowie 1,4-Cyclohexandiol in Frage.

Geeignete Di-und Polycarbonsäuren sind beispielsweise ortho-Phthalsäure, Terephthalsäure, Trimellithsäure, Tetrahydrophthalsäure, Hexahydrophthalsäure, Dimerfettsäuren, Adipinsäure und Acelainsäure.

Ggf. können auch bis zu 10 Gew.-% Diisocyanate, wie z.B. 2,4-Toluylendiisocyanat, 2,6-Toluylendiisocyanat, Isophorondiisocyanat, Diphenylmethandiisocyanat, Isophorondiisocyanat und Hexamethylen-1,6-diisocyanat mitverwendet werden. Der Einsatz von Diisocyanaten führt zur Bilding von Urethanalkyden.

Geeignete Monocarbonsäuren (Komponente e) sind beispielsweise Benzoesäure, para-Tertiärbutylbenzoesäure, Abietinsäure, Pivalinsäure, Laurinsäure, Stearinsäure, Cyclopentancarbonsäure und Cyclohexancarbonsäure. Die Monocarbonsäuren können in einem Anteil bis zu 20 Gew.-%, bezogen auf das Gesamtgewicht der Alkydharzbausteine, eingesetzt werden.

Überraschenderweise stellte sich heraus, daß bei vergleichbarem Molekulargewicht die Bindemittel um so niedrigviskoser werden, je höher der Fettsäureanteil im Alkydharzbindemittel ist.

Die Erfindung betrifft auch eine Verfahren zur Herstellung der erfindungsgemäßen Bindemittel, das dadurch gekennzeichnet ist, daß

a) 40 bis 80 Gew.-% trocknende und/oder halbtrocknende Fettsäuren,

b) 15 bis 35 Gew.-% Di-und/oder Polyole, wobei mindestens 80 Gew.-% der Alkohole aus Di-Penthaerythrit und/oder Di-Trimethylolpropan bestehen,

c) 5 bis 30 Gew.-% Di-und/oder Polycarbonsäuren bzw. deren Anhydride und

e) 0 bis 20 Gew.-% Monocarbonsäuren in der Schmelze oder in organischem Lösungsmittel bei Temperaturen von 200°C bis 260°C miteinander umgesetzt werden, ggf. noch organisches Lösungsmittel zugefügt wird und ggf. anschließend bei 60°C bis 140°C die Umsetzung mit bis zu 10 Gew.-% Diisocyanaten (d), wobei die Summe der Komponenten a), b), c), d) und e) 100 Gew.-% beträgt, erfolgt.

Die Alkydharzbinlding erfolgt auf dem Weg einer dem Fachmann wohl bekannten Polyveresterungsreaktion. Bei der Additionsreaktion mit Diisocyanaten kann ggf. ein Katalysator für die Urethanbildung verwendet werden. Ein besonders geeigneter Katalysator für die Polyurethanbildung ist Dibutylzinndilaurat.

Vorteilhafterweise besteht in dem erfindungsgemäßen Verfahren die Alkoholkomponente b) zu mehr als 95 Gew.-% aus Di-Pentaerythrit und/oder Di-Trimethylolpropan. Besonders vorteilhaft werden als Komponente a) 60 bis 80 Gew.-% trocknende und/oder halbtrocknende Fettsäuren verwendet.

Die Erfindung betrifft weiterhin Überzugsmittel mit einem Festkörpergehalt von mindestens 75 Gew.-%, welche die erfindungsgemäßen, zuvor beschriebenen lufttrocknenden Alkydharze als wesentliche Bindemittel sowie ggf. organische Lösungsmittel, Pigmente, Füllstoffe, Hilfsstoffe und Trocken stoffe enthalten. Durch Einsatz der erfindungsgmeäßen Alkydharzbindemittel ist es möglich, Überzugsmittel mit einem hohen Festkörpergehalt, sog. "High-Solid-Lacke", bei Applikationsviskosität herzustellen. Die erfindungs-

3

gemäßen Bindemittel führen zu einer Erniedrigung der Viskosität im Vergleich zu bekannten Alkydharzbindemitteln. Vorteilhafterweise weisen die erfindungsgemäßen Überzugsmittel einen Festkörpergehalt im Bereich von 85 bis 100 Gew.-% auf. Es ist also auch mit Hilfe der erfindungsgemäßen lufttrocknenden Alkydharze möglich, gut verstreichbare Überzugsmittel ohne Lösungsmittel herzustellen.

Die erfindungsgemäßen Überzugsmittel können ggf. Pigmente, Füllstoffe, Hilfsstoffe und Trockenstoffe enthalten. Als Pigmente kommen sowohl natürliche als auch synthetische, transparente und nichttransparente Pigmente in Frage.

Beispiele für geeignete Trockenstoffe sind Metallsalze (cyclo)-alliphatischer, natürlicher oder synthetischer Säuren, wie z.B. Linolsäure, Naphthensäure und 2-Ethylhexansäure, wobei als geeignete Metalle Kobalt, Mangan, Blei, Zirkon, Calcium und Zink zu nennen sind. Selbstverständlich können auch Mischungen von Sikkativen verwendet werden. Bezogen auf den Metallanteil werden die Trockenstoffe in einem Anteil von $10^{-3}$ bis etwa 3 Gew.-%, bezogen auf den Bindemittelfestkörper, verwendet.

Die Erfindung betrifft auch ein Verfahren zur Herstellung der erfindungsgemäßen Überzugsmittel, bei dem die erfindungsgemäß hergestellten Alkydharzbindemittel sowie ggf. organisches Lösungsmittel sowie Pigmente, Füllstoffe, Hilfsstoffe und Trockenstoffe durch Mischen und ggf. Dispergieren zu einer Überzugsmasse verarbeitet werden.

Die erfindungsgemäßen Überzugsmittel eignen sich insbesondere zur Verwendung als Bautenanstrichmittel. Sie lassen sich in genügend hohen Schichtdicken auftragen und haben gute Trocknungseigenschaften. Die Filmbildung der Überzugsmittel beruht im wesentlichen auf einer oxidativen Trocknung.

Nachfolgend wird die Erfindung anhand von Ausführungsbeispielen näher erläutert. Teile bedeuten Gewichtsteile, sofern nichts anderes angegeben wird. Die folgenden Ausführungsbeispiele werden in einem Reaktor, der ein Rührwerk, eine Stickstoffzuführleitung sowie eine Trennvorlage, die über einen Kühler das azeotrope Gemisch von Aromaten und Wasser trennt, durchgeführt. Der Reaktor kann elektrisch, induktiv oder durch Wärmeträgeröl geheizt werden. Die Temperaturführung erfolgt über ein Thermometer, das die Arbeitsguttemperatur regelt. In den Reaktor werden die Komponenten zur Herstellung von Alkydharzen eingewogen. Das Auskreisen von Wasser erfolgt mit Hilfe von Schleppmitteln.

Beispiel 1:

Aus 753 Teilen Fettsäure, die unter dem Markennamen Juvandol erhältlich ist, 195 Teilen Di-Pentaerythrit und 114 Teilen Phthalsäureanhydrid wird ein Alkydharz hergestellt. Im folgenden werden die Kennzahlen angegeben:
Fettsäuregehalt: 75 %
Säurezahl: 4 mg KOH/g
Hydroxylzahl: 26 mg KOH/g
Feststoffgehalt: 85 %, gelöst in Testbenzin
Viskosität (80%ig in Testbenzin): 10 dPa•s
Molekulargewicht: 13.000

Beispiel 2:

Aus 691 Teilen einer trocknenden Fettsäure, 33 g Para-Tertiärbutylbenzoesäure, 185 Teilen Di-Pentaerythrit, 61 Teilen Isophthalsäure, 32 Teilen Phthalsäurenanhydrid, 32 Teilen Isophorondiisocyanat und 29 Teilen einer Ketonharzes wird ein lufttrocknendes Alkydharz hergestellt.

Kennzahlen: Fettsäuregehalt: 69 %
Säurezahl: 9 mg KOH/g
Hydroxylzahl: 19 mg KOH/g
Reststoffgehalt: 85 Gew.-% in Testbensin
Viskosität (80%ig in Testbenzin/Xylol im Verhältnis 38:7): 7 dPa•s

4

Vergleichsbeispiel 1:

Aus 683 Teilen einer Fettsäure, die unter dem Markennamen Juvandolfettsäure auf dem Markt erhältlich ist, 184 Teilen Pentaerythrit und 201 Teilen Phthalsäureanhydrid wird ein Alkydharz hergestellt.
Fettsäuregehalt: 68 Gew.-%
Säurezahl: 8 mg KOH/g
Hydroxylzahl: 1,6 mg KOH/g
Feststoffgehalt: 65%ig, gelöst in Testbenzin
Viskosität (65%ig in Testbenzin): 8,5 dPa•s
Molekulargewicht: 22 220

Beispiel 3:

Aus 783 Teilen einer halbtrocknenden Fettsäure, 177 Teilen Di-Pentaerythrit und 103 Teilen Phthalsäureanhydrid wird ein Alkydharz hergestellt.
Fettsäuregehalt: 78 Gew.-%
Hydroxylzahl: unter 2 mg KOH/g
Säurezahl: unter 2 mg KOH/g
Feststoffgehalt: 100 Gew.-%
Viskosität (80%ig in Testbenzin): 2,4 dPa•s
Molekulargewicht: 14 300

Vergleichsbeispiel 2 (mittelöliges Alkydharz):

Aus 46 g einer Fettsäure, die unter dem Markennamen Juvandolfettsäure erhältlich ist, 229 Teilen Pentaerythrit, 80 Teilen Benzoesäure und 272 Teilen Phthalsäureanhydrid wird ein mittelöliges Alkydharz hergestellt.
Fettsäuregehalt: 50 Gew.-%
Säurezahl: 10 mg KOH/g
Hydroxylzahl: 20 mg KOH/g
Feststoffgehalt: 50 Gew.-% in Testbenzin und Xylol
Viskosität (50%ig in Xylol): 4,5 dPa•s
Molekulargewicht: 88 700

Beispiel 4:

Aus 416 Teilen einer trocknenden Fettsäure, 353 Teilen Di-Trimethylolpropan, 66 Tielen Benzoesäure und 229 Teilen Phthalsäureanhydrid wird ein Alkydharz hergestellt.
Fettsäuregehalt: 42 Gew.-%
Säurezahl: 8 mg KOH/g
Hydroxylzahl: 29 mg KOH/g
Feststoffgehalt: 80 Gew.-% in Testbenzin und Xylol
Viskosität (50%ig in Xylol): 1,7 dPa•s
Molekulargewicht: 6 460

Beispiel 5:

Aus 595 Teilen einer trocknenden Fettsäure, 243 Teilen Di-Pentaerythrit, 95 Teilen Benzoesäure und 157 Teilen Phthalsäureanhydrid wird ein Alkydharzbindemittel hergestellt.
Fettsäuregehalt: 60 Gew.-%
Säurezahl: 7 mg KOH/g

Hydroxylzahl: 43 mg KOH/g
Feststoffgehalt: 70 Gew.-% in Testbenzin
Viskosität (70%ige in Testbenzin): 4 dPa•s
Molekulargewicht: 8 000

Im folgenden werden Anwendungsbeispiel für die erfindungsgemäßen Alkydharzbindemittel gegeben. Für die in den Beispielen 2, 3 und 4 hergestellten Alkydharze werden Lackformulierungen angegeben. Dabei wird jeweils mit einem bekannten Sojaalkydharz verglichen, welches ohne Mitverwendung von Di-Pentaerythrit oder Di-Trimethylolpropan hergestellt worden ist (als Alkoholkomponente Pentaerythrit).

|  | Vergleichsbeispiel | Beispiel a) |
|---|---|---|
|  | 50 T. Sojaalkydharz (65%ig) | 69 T. Alkydharz aus Bsp.2, 85%ig |
| Bentone-Paste (10%ig) | 1,5 T. | 1,5 T. |
| CA-Octoat (6%ig) | 1,0 T. | 1,0 T. |
| $TiO_2$ | 26,0 T. | 25,0 T. |
| Sojalecithin | 0,3 T. | 0,3 T. |
| Standöl | 5,0 T. | - |
| Ba-Octoat (6%ig) | 2,0 T. | 1,0 T. |
| Co-Octoat (6%ig) | 1,0 T. | 1,0 T. |
| Zr-Octoat (6%ig) | 1,0 T. | - |
| Hautverhütungsmittel | 0,5 T. | 0,5 T. |
| Siliconöl | 0,5 T. | 0,5 T. |
| Testbenzin | 1,2 T. | 0,2 T. |
| Feststoffgehalt | 65 % | 85 % |

|  | Vergleichsbeispiel | Beispiel b) |
|---|---|---|
|  | 50,0 T. Sojaalkydharz (45%ig) | 53,0 T. Alkydharz aus Bsp.3 (85%ig) |
| Bentone-Paste (10%ig) | 0,5 T. | 0,5 T. |
| Soja-Lecithin | 0,3 T. | 0,3 T. |
| Ca-Naphthenat (6%ig) | 1,0 T. | 1,0 T. |
| $TiO_2$ | 25,0 T. | 25,0 T. |
| Mattierungspaste (20%ig) | 15,o T. | 17,5 T. |
| Zr-Octoat | 2,5 T. | - |
| Co-Octoat | 1,0 T. | 1,0 T. |
| Hautverhütungsmittel | 0,5 T. | 0,5 T. |
| Siliconöl | 0,5 T. | 0,5 T. |
| Testbenzin | 3,7 T. | 0,7 T. |
| Feststoffgehalt | 51 % | 74 % |

|  | Vergleichsbeispiel | Beispiel c) |
|---|---|---|
|  | 45,0 T. eines 45%igen Juvandolalkydharzes | 45,0 T. des Alkydharzes aus Bsp.4 (85 %) |
| Bentone-Paste (10%ig) | 3,0 T. | 3,0 T. |
| Ca-Naphthenat (6%ig) | 1,0 T. | 1,0 T. |
| Titanoxid | 11,0 T. | 11,0 T. |
| Kreide | 10,0 T. | 10,0 T. |
| Kaolin | 14,0 T. | 14,0 T. |
| Talkum | 12,0 T. | 12,0 T. |
| Co-Octoat (6%ig) | 1,0 T. | 1,0 T. |
| Hautverhütungsmittel | 1,0 T. | 1,0 T. |
| Testbenzin | 2,0 T. | 2,0 T. |
| Feststoffgehalt | 68 % | 85 % |

Die in den Beispielen a), b) und c) hergestellten Lacke wurden bezüglich ihrer Trocknungseigenschaften mit den Lacken aus den Vergleichsbeispielen verglichen. Dabei zeigte sich, daß bei gleicher Naßauftragsschichtdicke Staubfreiheit nach 2 Stunden (Beispiele) bzw. 1,5 Stunden (Vergleichsbeispiele) erzielt wurde. Klebfreiheit wurde nach 3,5 Stunden (Beispiele) bzw. 2,0 Stunden (Vergleichsbeispiele) erzielt. Die Durchtrocknung war bei den Beispielen und den Vergleichsbeispielen jeweils nach 10 Stunden in Ordnung.

**Ansprüche**

1. Lufttrocknende Alkydharzbindemittel, hergestellt aus trocknenden und/oder halbtrocknenden Fettsäuren, Di-und/oder Polyolen, wobei in Teil der Alkohole durch Di-Trimethylolpropan und/oder Di-Pentaerythrit ersetzt ist, und Di-und/oder Polycarbonsäuren, dadurch gekennzeichnet, daß die Alkydharze erhältlich sind aus
a) 40 bis 80 Gew.-% trocknenden und/oder halbtrocknenden Fettsäuren,
b) 15 bis 35 Gew.-% Di-und/oder Polyolen, wobei mindestens 80 Gew.-% der Alkohole aus Di-Pentaerythrit und/oder Di=Trimethylolpropan bestehen,
c) 5 bis 30 Gew.-% Di-und/oder Polycarbonsäuren bzw. deren Anhydriden,
d) 0 bis 10 Gew.-% Diisocyanaten und
e) 0 bis 20 Gew.-% Monocarbonsäuren,
wobei die Summe der Komponenten a), b), c), d) und e) 100 Gew.-% beträgt.

2. Alkydharzbindemittel nach Anspruch 1, dadurch gekennzeichnet, daß die Alkoholkomponente b) zu mehr als 95 Gew.-% aus Di-Pentaerythrit und/oder Di-Trimethylolpropan besteht.

3. Alkydarzbindemittel nach Anspruch 1 und 2, dadurch gekennzeichnet daß als Komponente a) 60 bis 80 Gew.-% trocknende und/oder halbtrocknende Fettsäuren verwendet werden.

4. Verfahren zur Herstellung lufttrocknender Alkydharzbindemittel, hergestellt aus trocknenden und/oder halbtrocknenden Fettsäuren, Di-und/oder Polyolen, wobei ein Teil der Alkohole durch Di-Trimethylolpropan und/oder Di-Pentaerythrit ersetzt ist, und Di-und/oder Polycarbonsäuren, dadurch gekennzeichnet, daß
a) 40 bis 80 Gew.-% trocknende und/oder halbtrocknende Fettsäuren,
b) 15 bis 35 Gew.-% Di-und/oder Polyole, wobei mindestens 80 Gew.-% der Alkohole aus Di-Pentaerythrit und/oder Di-Trimethylolpropan bestehen,
c) 5 bis 30 Gew.-% Di-und/oder Polycarbonsäuren oder deren Anhydride und ggf.
e) bis zu 20 Gew.-% Monocarbonsäuren
in der Schmelze oder in organischem Lösungsmittel bei Temperaturen von 200°C bis 260°C miteinander umgesetzt werden, ggf. noach organisches Lösungsmittel zugefügt wird und ggf. anschließend bei 60°C bis 140°C die Umsetzung mit bis zu 10 Gew.-% Diisocyanaten (d), wobei die Summe der Komponenten a), b), c), d) und e) 100 Gew.-% beträgt, erfolgt.

5. Verfahren nach Anspruch 4, dadurch gekennzeichnet, daß die Alkoholkomponente b) zu mehr als 95 Gew.-% aus Di-Pentaerythrit und/oder Di-Trimethylolpropan besteht.

6. Verfahren nach Anspruch 4 und 5, dadurch gekennzeichnet, daß als Komponente a) 60 bis 80 Gew.-% trocknende und/ oder halbtrocknende Fettsäuren verwendet werden.

7. Überzugsmittel mit einem Festkörpergehalt von mindestens 75 Gew.-%, enthaltend als wesentliches Bindemittel das Alkydharzbindemittel nach Anspruch 1 bis 3 sowie ggf. organisches Lösungsmittel sowie Pigmente, Füllstoffe, Hilfsstoffe und Trockenstoffe.

8. Überzugsmittel nach Anspruch 7, dadurch gekennzeichnet, daß es einen Festkörpergehalt im Bereich von 85 bis 100 Gew.-% hat.

9. Verfahren zur Herstellung eines Überzugsmittels mit einem Festkörpergehalt von mindestens 75 Gew.-%, wobei das nach dem Verfahren nach Anspruch 4 bis 6 hergestellte Alkydharzbindemittel sowie ggf. organisches Lösungsmittel sowie Pigmente, Füllstoffe, Hilfsstoffe und Trockenstoffe durch Mischen und ggf. Dispergieren zu einer Überzugsmasse verarbeitet werden.

10. Verwendung der Überzugsmittel nach Anspruch 7 und 8 als lufttrocknende Bautenanstrichmittel.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 459 581 (J.G. OSWALD) * Ansprüche 1,7; Seite 1, Spalte 1, Zeilen 1-33 * --- | 1-10 | C 08 G 63/48 C 08 G 63/66 C 09 D 3/64 |
| X | US-A-3 830 763 (J. GILLIAN et al.) * Ansprüche 1-4; Zusammenfassung * --- | 1-10 | |
| A | EP-A-0 167 962 (HENKEL KOMMANDITGESELLSCHAFT AUF AKTIEN) * Ansprüche 1-11 * --- | 1-10 | |
| A | DE-C- 859 952 (DEUTSCHE GOLD- UND SILBER SCHEIDEANSTALT VORMALS ROESSLER) * Ansprüche 1,2 * ----- | 1-5 | |

RECHERCHIERTE SACHGEBIETE (Int. Cl.4)

C 08 G
C 09 D

Der vorliegende Recherchenbericht wurde für alle Patentansprüche erstellt

| Recherchenort | Abschlußdatum der Recherche | Prüfer |
|---|---|---|
| DEN HAAG | 12-01-1988 | DECOCKER L. |

EPO FORM 1503 03.82 (P0403)